# EUROPEAN PATENT APPLICATION

(11) **EP 1 162 102 A2**
(43) Date of publication of application: **12.12.2001**
(21) Application number: 01304908.5
(22) Date of filing: 05.06.2001
(51) Int. Cl.: B60K 35/00, B60K 31/00, G01P 1/10, G08G 1/0967, G02B 27/01, H04B 1/00

(54) **Speed indication using navigation unit**

(30) Priority: 05.06.2000 GB 0013676; 12.07.2000 GB 0017169
(71) Applicant: Howard, John Bruce, Barford, Warwick CV35 8BZ (GB)
(72) Inventor: Howard, John Bruce, Barford, Warwick CV35 8BZ (GB)
(74) Representative: Elsy, David

(57) **Abstract**

A speed indication device for a vehicle comprising a navigation unit 10 which also includes a display panel 14 The navigation unit 10 is arranged such that it is in communication with a satellite 16 via a GPS unit (not shown) and can monitor the speed of the vehicle, shown on a speedometer 18. The navigation unit 10, in use, is loaded with map and road speed limit data which is stored on a CD-ROM 28. An indicator 12 is positioned such that where the speed of the vehicle deviates from that defined by the road speed limit data, a driver of the vehicle will be informed, by means of a visual indication, of the extent of that deviation.

## Description

The present invention relates to a speed indication device and is particularly concerned with a comparative speed indication device which indicates the speed of a car relative to the legal speed limit.

Known vehicles have speed displayed on a speedometer mounted in the dashboard. If the driver is trying to keep close to a particular speed (such as the speed limit) it is very difficult to refer to the speedometer sufficiently frequently, as it requires a specific effort and diverts attention from the road ahead.

In known in-car satellite navigation systems, the position of a vehicle on a road map can be accurately calculated and displayed on a screen within the vehicle. The road map data is usually contained on a CD-ROM which is loaded into a control unit of the in-car navigation system. The use of a CD-ROM allows maps from various countries to be loaded and/or upgraded due to changes in road systems. In currently available in-car navigation systems, the system can constantly monitor speed of the vehicle so as to provide information which is then used to check the position of the vehicle and to predict journey times.

Consideration has also been given to incorporating information concerning speed limits in the maps mentioned above - see for example DETR (Department of Environment, Transport and the Regions) Document "New Directions in Speed Management" Code 99ARSE0518E dated March 2000, paragraph 99.

The speed limit on any piece of road is often very difficult to determine quickly if the driver has not seen or remembered the last change in speed limit and that is a problem for drivers. Speed limit repeater signs in the UK are often non-existent or infrequent. These aspects are of great importance in road safety as there are obvious known dangers in travelling in a vehicle at a speed greater than that of the legal speed limit. Further, due to the nature of driving, it is possible to become desensitised to speed, especially when driving long distances. This can lead to drivers operating vehicles at speeds much greater than they intend.

It is an object of the present invention to provide a speed indication device which will help to address the foregoing problems.

According to one aspect of the invention there is provided a speed indication device for a vehicle comprising a navigation unit which, in use, is loaded with map and road speed limit data, and an indicator positioned such that where the speed of the vehicle deviates from that defined by the road speed limit data, a driver of the vehicle will be informed of the extent of that deviation.

In the present embodiment, the navigation unit may be of a known type and may monitor the position of the vehicle by means, for example, including GPS. The unit may also monitor the speed of the vehicle. The data loaded into the unit preferably comprises maps saved in a digital format. In the present invention the maps will also contain road speed limit data which the navigation unit can read thereby enabling it to know the speed limit on the road along which it is travelling.

The indicator maybe arranged to provide an indication that the vehicle is being driven at a given speed limit defined by the road speed limit data.

The indicator may be a visual indicator and it may comprise at least one section which illuminates. In such a case the indicator may change in appearance to indicate deviation from a given speed limit. The change in appearance may, if desired, be effected by means of a plurality of sections each of which can be illuminated, preferably independent of each other. In such a case, each section may represent a particular range of speed relative to the speed limit defined by the road speed limit data.

The or each section may be illuminated by means of a bulb, a diode or a liquid crystal display or any other means convenient for varying appearance

Preferably, the said indicator changes colour or shade of a single colour. Where said sections are provided, the sections may be sections of different colours or different shades of a single colour. If desired, several shades or levels of brightness of a single colour could be used.

In another embodiment of the invention, the indicator may comprise a 'Head Up Display' (HUD), and, in such a case, may provide a colour or other change in appearance as aforesaid.

In use, the indicator is preferably located within the field of view of the driver of the vehicle. For example, the indicator may be located at or near the bottom of the field of view of the driver when looking at the road ahead. The indicator may be located above a steering wheel of the vehicle. In the latter case the indicator is preferably arranged as centrally as possible without obscuring the view ahead.

By positioning the indicator in the field of view as set out in the immediately preceding paragraph and preferably utilising a variation in colour or shade of a single colour, the driver does not need to look down directly or refocus his eyes on a specific point, e.g., a speedometer within the vehicle, to check the speed of the vehicle relative to the speed limit for the road along which the vehicle is travelling. The driver will therefore be able to drive the vehicle with a clear indication of speed relative to the speed limit without being diverted from driving at his or her intended speed and minimising distraction from concentration on the road.

In use, the navigation unit may be loaded with the necessary map/speed limit information. The navigation unit determines the position of the vehicle on the map and therefore the speed limit of the road along which it is travelling. The navigation unit may also monitor the speed of the vehicle as it is moving. The navigation unit may then compare the two sets of data being received, i.e. the current speed of the vehicle and legal speed limit for the road along which the vehicle is travelling. The results of the compared sets of data are then displayed by the indicator. If, for example, the speed of the vehicle is below or equal to the legal speed limit then for instance, a said section coloured blue is illuminated. If, for example, the speed is above the legal speed limit but less than 15% above the limit then for instance, a section coloured yellow is illuminated. If, for example, the speed is greater than 15% above the legal limit then for instance, a section coloured red is illuminated.

In another embodiment the indicator may be mounted on an interior rear view mirror or windscreen pillar.

It will be noted that the navigation device may be set up or re-calibrated so as to change the ranges of relative speed over which the indicator changes in appearance. For example, where a plurality of sections is used a midsection may begin below the speed limit.

It will also be noted that the speed of the vehicle, the road speed limit and therefore the deviation between them can be monitored continuously throughout the journey of the vehicle.

The device of the present invention helps to make the driver of a vehicle continuously aware of his performance relative to the speed limit for each piece of road along which the vehicle travels. To assist such awareness an audible signal may also be used to indicate a change in the speed limit for a particular stretch of road along which the vehicle is travelling. The signal may be produced by the navigation unit.

The navigation system may also cause the current speed limit to be displayed, for example, numerically.

The present invention may also be useful where there are multiple speed limits for any one piece of road. Should a piece of road have different speed limits which apply at different times such as a slow speed at school travel times but higher at other times, the present invention would be particularly useful. Also, the speed limit could be set lower for dangerous sections of road or where there are other hazards. The nature of the hazards may also be displayed. Variation of limits could be by place, time of day, day of week or year, etc.

The invention will be particularly useful where drivers have little or no knowledge of the roads on which they are travelling.

It is also envisaged that the present invention may be connected to a mobile phone network so as to allow real time updates. This would allow the driver of the vehicle to be alerted to accident or road congestion situations, or short term traffic hazards such as cultural or sporting events. The invention would show vehicle speed relative to the temporary new speed limit data. Updates could also be obtained from roadside beacons.

The device of the present invention may also be used in conjunction with or independently of a further aspect of the invention which comprises a speed indication device to be used in a vehicle which has a known speedometer.

Known vehicles have speed displayed on a speedometer mounted in the dashboard. If the driver is trying to keep track of his exact speed (to ensure he is not travelling over the speed limit) it can be very difficult to refer to the speedometer sufficiently frequently, as it requires a specific effort and diverts attention from the road ahead.

The speed at which a vehicle travels is of great importance in road safety as there are obvious known dangers in travelling in a vehicle at a speed greater than that of the legal speed limit. Further, due to the nature of driving, it is possible to become desensitised to speed, especially when driving long distances. This can lead to drivers operating vehicles at speeds much greater than they intend.

The speed indication device to be used in a vehicle which has a known speedometer comprises an indicator positioned, in use, within the field of view of a driver of a vehicle when he is looking at the road ahead, thereby informing the driver of the vehicle of the extent of his speed without diverting his attention from said road, the indicator being arranged to indicate speed by means of at least one section which changes colour or shade of a single colour in response to speed.

The speed indication device to be used in a vehicle having an existing known speedometer therein, may also comprise an indicator positioned so as to be within the field of view of a driver of a vehicle when he is looking at the road ahead, thereby informing the driver of the vehicle of the extent of his speed without diverting his attention from said road, the indicator being arranged to indicate speed by means of at least one section which changes colour or shade of a single colour response to speed.

A plurality of said sections may be provided, each of which can operate independently to provide different colours or shades of colour. In such a case, each section may represent a particular range of speed of the vehicle.

The or each section may be illuminated to provide the colour(s) or shade of a single colour, for example, by means of a bulb, a diode or a liquid crystal display or any other means convenient for varying appearance.

Where the or each section provides different shades of a single colour, several shades or levels of brightness of a single colour could be used. Alternatively, shades of a colour may be used to represent progression through the speed range represented by said colour.

The speed indication device to be used in a vehicle having an existing known speedometer may comprise a 'Head Up Display' (HUD).

In use, the indicator is preferably located within the field of view of the driver of the vehicle. For example, the indicator may be located at or near the bottom of the field of view of the driver when looking at the road ahead. The indicator may be located above a steering wheel of the vehicle. In the latter case the indicator is preferably arranged as centrally as possible without obscuring the view ahead.

By positioning the indicator in the field of view as set out in the immediately preceding paragraph and by utilising the change in colour or shade of a single colour, the driver does not need to look down directly or refocus his eyes on a specific point, e.g., the normal speedometer built into the dashboard of the vehicle, to check the speed of the vehicle. The driver will therefore be able to drive the vehicle with a clear indication of speed without being diverted from driving at his or her intended speed and minimising distraction from concentration on the road.

In use, the speed of the vehicle is displayed by the indicator. If, for example, the speed of the vehicle is below 20 mph then for instance, a said section coloured pink is illuminated. If, for example, the speed is between 20 and 30 mph then for instance, a section coloured blue is illuminated. If, for example, the speed is between 30 and 40 mph then for instance, a section coloured yellow is illuminated. If, for example, the speed is between 40 and 50 mph then for instance, a section coloured green is illuminated. If, for example, the speed is between 50 and 60 mph then for instance, a section coloured purple is illuminated. If, for example, the speed is between 60 and 70 mph then for instance, a section coloured orange is illuminated. If, for example, the speed is greater than 70 mph then for instance, a section coloured red is illuminated.

The speed indication device to be used in a vehicle having an existing known speedometer may be mounted on an interior rear view mirror or windscreen pillar.

It will be noted that the indicator device may be set up or re-calibrated so as to change the ranges of speed over which the indicator changes in appearance. For example, where a plurality of sections is used a mid-section may begin below 50 mph. Further, the number of sections and/or colours may be altered according to requirements.

It will also be noted that the speed of the vehicle can be monitored continuously throughout the journey of the vehicle.

The speed indication device to be used in a vehicle having an existing known speedometer helps to make the driver of a vehicle continuously aware of the vehicle's performance. To assist such awareness an audible signal may also be used to indicate a change in the speed of the vehicle, for example, when the vehicle reaches a speed of greater than 70 mph.

The indicator may, in addition, display the speed of the vehicle numerically.

A device in accordance with the invention will now be described by way of example, and with reference to the accompanying drawings in which:
Figure 1 is a diagrammatic representation of the components of a device in accordance with the present invention;
Figure 2 is a diagrammatic view of the inside of a vehicle looking forwards;
Figure 3 is flow chart showing the use of the device of the present invention to provide continuous monitoring;
Figure 4 is a diagrammatic representation of the components of a speed indication device to be used in a vehicle having an existing known speedometer therein, which is to be used in conjunction with the device of the present invention;
Figure 5 is a diagrammatic view of the inside of a vehicle looking forwards; and
Figure 6 is a flow chart showing the use of a speed indication device to be used in a vehicle having an existing known speedometer therein to provide continuous monitoring.

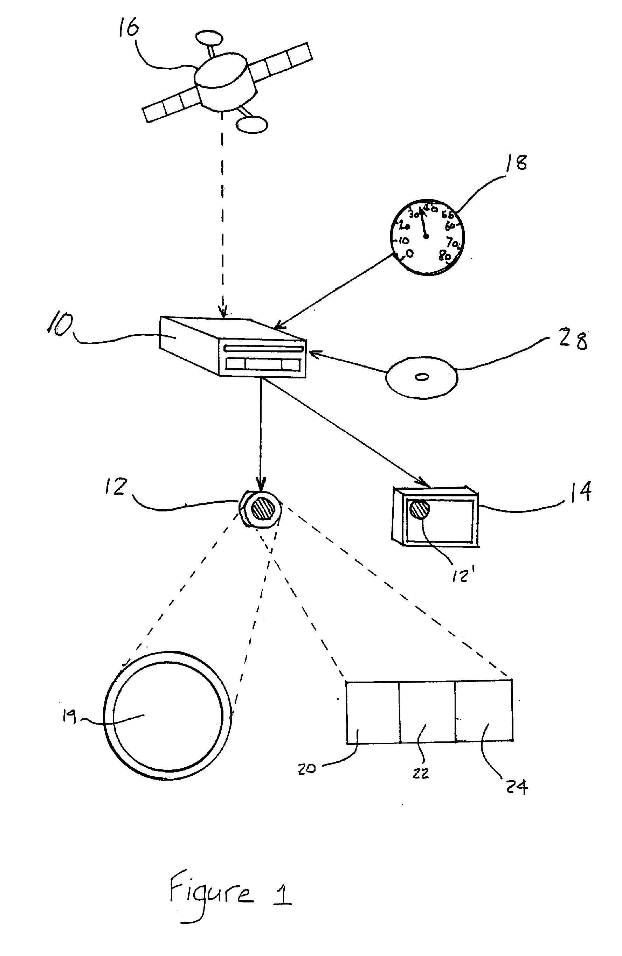

Looking at Figure 1, a speed indication device for a vehicle comprises a navigation unit 10 and an indicator 12.

The navigation unit 10 also includes a display panel 14. The navigation unit 10 is arranged such that it is in communication with a satellite 16 via a GPS unit (not shown) and can monitor the speed of the vehicle, shown on a speedometer 18.

As shown on a first enlarged view of the indicator 12 in Figure 1, the indicator 12 is a visual indicator and comprises a single section 19. The single section 19 is a LCD screen which can display different colours or shades of a single colour. In another embodiment, shown in a second enlarged view of the indicator 12 in Figure 1 the indicator 12 comprises three sections 20, 22 and 24 respectively, which can be illuminated independently of each other. In the present example, the sections 20, 22 and 24 are blue, yellow and red respectively. The sections are illuminated independently by means of diodes (not shown).

Map and road speed limit data is located from a CD-ROM 28 or other input media.

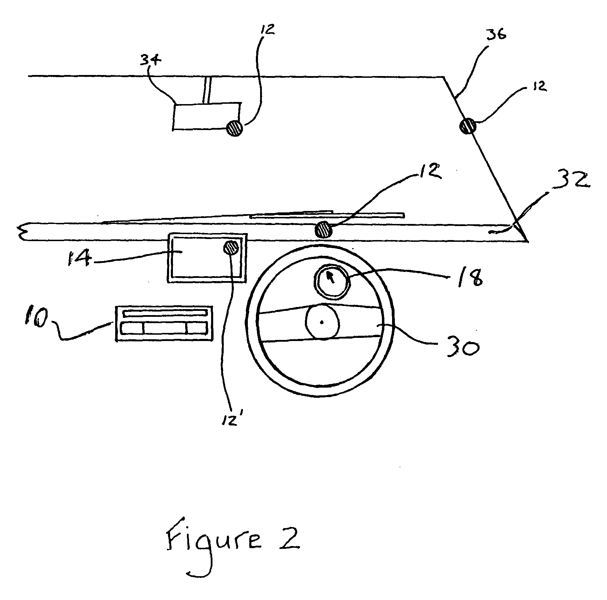

Looking at Figure 2, in the present example, the indicator 12 is positioned at the bottom of the field of view of a driver when looking at the road ahead and is located above a steering wheel 30 on a dashboard 32 of the vehicle. Alternatively, the indicator 12 may be mounted on an interior rear view mirror 34 or on a windscreen pillar 36. In another embodiment of the invention, the indicator may form part of the navigation unit 10 as shown at 12. In such a case the indicator 12 may comprise a section of the display panel 14.

In use, the data stored on the CD-ROM 22 is loaded into the navigation unit 10. The data loaded contains the necessary map/speed limit information.

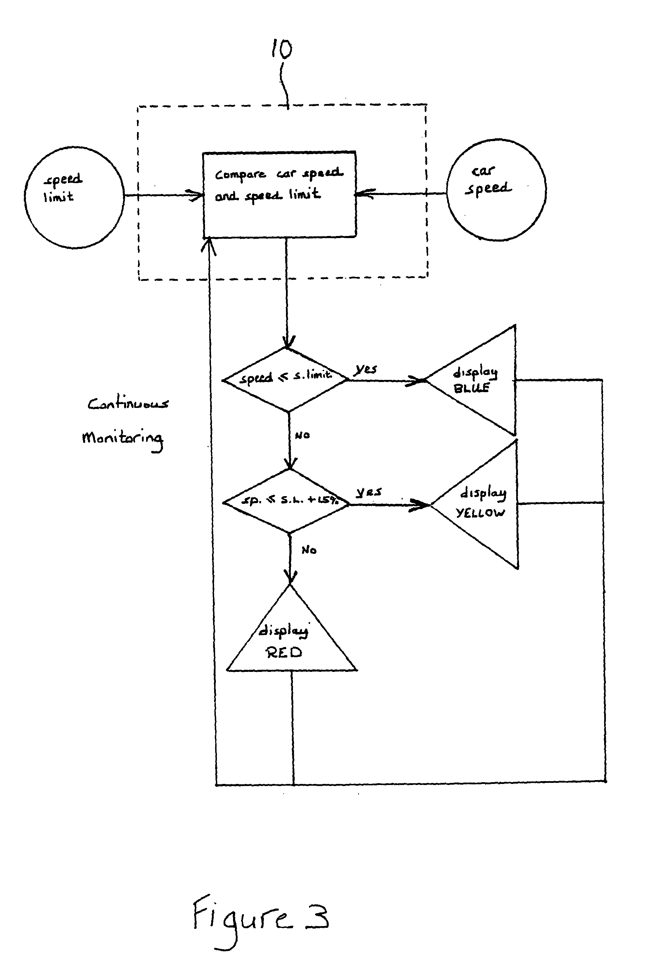

Looking at Figure 3, the navigation unit 10 receives, during a journey, the current speed of the vehicle and the position of the vehicle (via GPS) which allows the unit to determine the speed limit of the road along which the vehicle is travelling.

The unit 10 compares the speed of the vehicle and the legal speed limit for the road along which it is travelling. The results of the compared sets of data are then displayed by the indicator 12.

When the indicator 12 comprises a single section 19, then if the speed of the vehicle is below or equal to the legal speed limit then the section 19 displays a blue colour. If the speed is above the legal speed limit but less that say 15% above the limit then the section 19 displays a yellow colour. If the speed is greater than say 15% above the legal speed limit then the section 19 displays a red colour.

Where the indicator 12 comprises three sections 22, 22 and 24, then if the speed of the vehicle is below or equal to the legal speed limit then section 20, which is coloured blue is illuminated. If the speed is above the legal speed limit but less than say 15% above the limit then the section 22 coloured yellow is illuminated. If the speed is greater than say 15% above the legal limit then the section 24 coloured red is illuminated.

The process described above is continuous thereby allowing the driver to monitor the speed of his vehicle continuously relative to that of the legal speed limit.

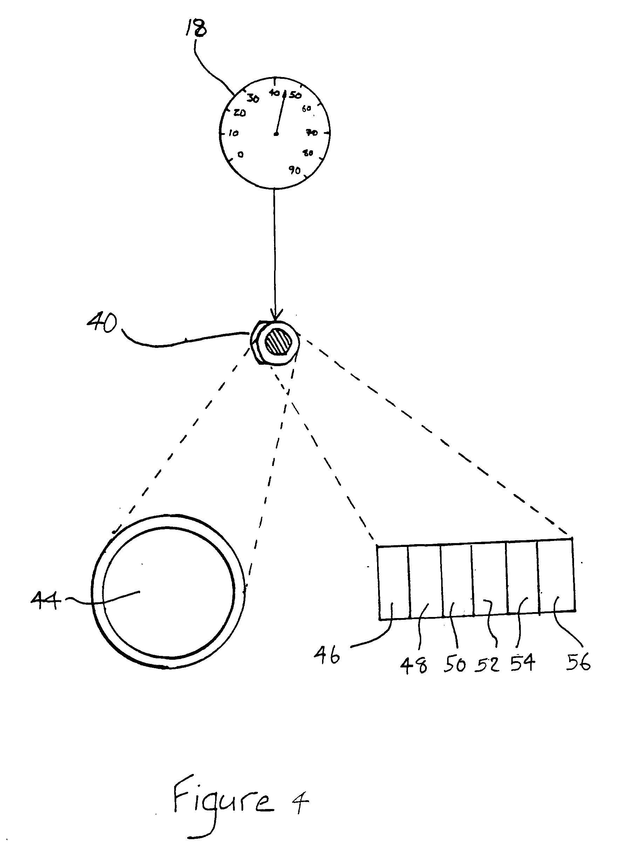

Looking at Figure 4, a speed indication device for a vehicle comprises an indicator 40 arranged to monitor the speed of the vehicle, which speed will also be shown on the usual speedometer 18, already installed in the vehicle.

As shown on a first enlarged view of the indicator 40 in Figure 1, the indicator 40 is a visual indicator and comprises a single section 44. The single section 14 is a LCD screen which can display different colours or shades of a single colour. In another embodiment, shown in a second enlarged view of the indicator 10 in Figure 1 the indicator 40 comprises six sections 46, 48, 50, 52, 54 and 56 respectively, which can be illuminated independently of each other. In the present example, the sections 46, 48, 50, 52, 54 and 56 are pink, blue, yellow, green, orange and red respectively. The sections are illuminated independently by means of diodes (not shown).

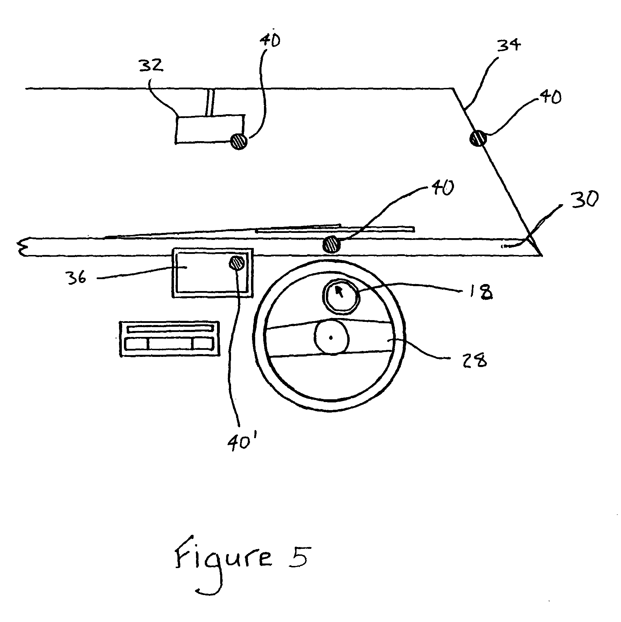

Looking at Figure 5, in the present example, the indicator 40 is positioned at the bottom of the field of view of a driver when looking at the road ahead and is located above a steering wheel 28 on a dashboard 30 of the vehicle. Alternatively, the indicator 40 may be mounted on an interior rear view mirror 32 or on a windscreen pillar 34. In another embodiment of the invention, the indicator may form part of a navigation unit 36 as shown at 40. In such a case the indicator 40 may comprise a section of the display panel of the navigation unit 36 which is the subject of the present invention as described above.

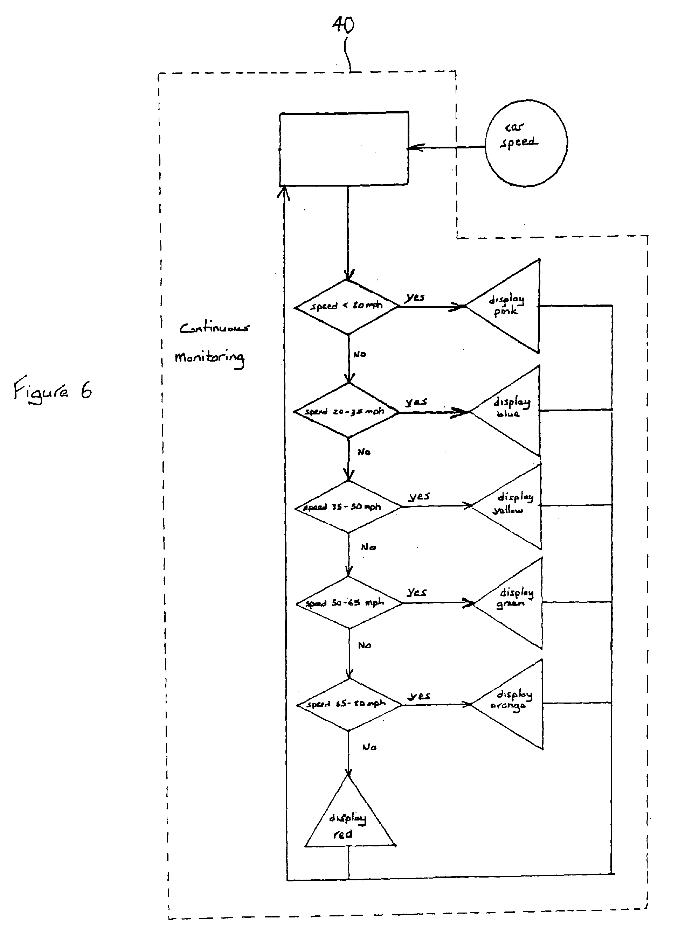

Looking at Figure 6, the indicator 40 receives, during a journey, a signal corresponding to the current speed of the vehicle. In use, the indicator 40, by means of suitable electrical circuitry (not shown) analyses the signal and displays the speed of the vehicle.

When the indicator 40 comprises a single section 44, then if the speed of the vehicle is below 20 mph then the section 44 displays a pink colour. If the speed is between 20 and 35 mph then the section 44 displays a blue colour. If the speed is between 35 and 50 mph then the section 44 displays a yellow colour. If the speed is between 50 and 65 mph then the section 44 displays a green colour. If the speed is between 65 and 80 mph then the section 44 displays an orange colour. Finally, if the speed is greater than 80 mph then the section 44 displays a red colour.

Where the indicator 40 comprises six sections 46, 48, 50, 52, 54, and 56 then if the speed of the vehicle is below 20 mph then section 46, which is coloured pink is illuminated. If the speed is between 20 and 35 mph then the section 48, coloured blue, is illuminated. If the speed between 35 and 50 mph then the section 50, coloured yellow, is illuminated. If the speed of the vehicle is between 50 and 65 mph then the section 52, coloured green, is illuminated. If the speed of the vehicle is between 65 and 80 mph then the section 54, coloured orange, is illuminated. Finally, if the speed of the vehicle is greater than 80 mph then the section 56, coloured red, is illuminated.

The process described above is continuous thereby allowing the driver to monitor the speed of his vehicle continuously.

## Claims

1. A speed indication device for a vehicle comprising a navigation unit which, in use, is loaded with map and road speed limit data, and an indicator positioned such that where the speed of the vehicle deviates from that defined by the road speed limit data, a driver of the vehicle will be informed of the extent of that deviation.

2. A device according to claim 1 in which the navigation unit monitors the position of the vehicle by means including GPS.

3. A device according to claim 1 or 2 in which the navigation unit also monitors the speed of the vehicle.

4. A device according to claim 1 in which the map and road speed limit data loaded into the navigation unit is saved in a digital format.

5. A device according to claim 1 or 4 in which the navigation unit can read the road speed limit data thereby enabling it to know the speed limit on the road along which it is travelling.

6. A device according to any one of the preceding claims in which the navigation unit compares the current speed of the vehicle and legal speed limit for the road along which the vehicle is travelling.

7. A device according to claim 6 in which the navigation unit continuously compares the current speed of the vehicle and legal speed limit for the road along which the vehicle is travelling.

8. A device according to claim 6 or 7 in which the compared sets of data are displayed by the indicator.

9. A device according to any preceding claim in which the indicator is arranged to provide an indication that the vehicle is being driven at a given speed limit defined by the road speed limit data.

10. A device according to any preceding claim in which the indicator is a visual indicator.

11. A device according to claim 10 in which the indicator comprises at least one section which illuminates.

12. A device according to claim 11 in which the indicator changes in appearance to indicate deviation from a given speed limit.

13. A device according to claim 12 in which the change in appearance is effected by means of a plurality of sections each of which may be illuminated.

14. A device according to claim 13 in which the plurality of sections are illuminated independent of each other.

15. A device according to claim 14 in which each section represents a particular range of speed relative to the speed limit defined by the road speed limit data.

16. A device according to any one of claims 11 to 15 in which the or each section are illuminated by means of a bulb, a diode, or a liquid crystal display.

17. A device according to any one of claims 10 to 16 in which the indicator changes colour or shade of a single colour.

18. A device according to claim 17 in which several shades or levels of brightness of a single colour are used.

19. A device according to any one of claims 11 to 16 or to claim 17 when appendant to any one of claims 11 to 16 in which the sections are sections of different colours or different shades of a single colour.

20. A device according to any preceding claim in which the indicator is a 'Head Up Display' (HUD).

21. A device according to claim 20 in which the HUD provides a colour or other change in appearance.

22. A device according to any preceding claim in which the indicator is located within the field of view of the driver of the vehicle.

23. A device according to claim 22 in the indicator is located at or near the bottom of the field of view of the driver when looking at the road ahead.

24. A device according to claim 22 in which the indicator is located above a steering wheel of the vehicle, an interior rear view mirror or windscreen pillar.

25. A device according to claim 24 in which the indicator is arranged as centrally as possible without obscuring the view ahead.

26. A device according to any one of the preceding claims in which the navigation unit display the current speed of the vehicle.

27. A device according to any one of the preceding claims in which the device produces an audible signal to indicate a change in speed limit for a particular stretch of road along which the vehicle travels.

28. A device according to claim 27 in which the audible signal is produced by the navigation unit.

29. A device according to any one of the preceding claims in which additional data may be supplied to the navigational unit by means of a mobile phone network.

30. A speed indication device for a vehicle substantially as described herein with reference to the accompanying drawings.

31. A navigation unit comprising, in use, an indicator in accordance with anyone of claims 1 and 9 to 25.

32. A vehicle comprising a speed indication device in accordance with any one of claims 1 to 30.
